(19) Europäisches Patentamt / European Patent Office / Office européen des brevets

(11) **EP 4 040 381 A1**

(12) **EUROPEAN PATENT APPLICATION**
published in accordance with Art. 153(4) EPC

(43) Date of publication:
**10.08.2022 Bulletin 2022/32**

(21) Application number: **19947609.4**

(22) Date of filing: **01.10.2019**

(51) International Patent Classification (IPC):
**G06T 7/00** $^{(2017.01)}$

(52) Cooperative Patent Classification (CPC):
**G06T 7/00**

(86) International application number:
**PCT/JP2019/038734**

(87) International publication number:
**WO 2021/064857 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **UCHIDA Hidetsugu**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **ATTRIBUTE DETERMINATION DEVICE, ATTRIBUTE DETERMINATION PROGRAM, AND ATTRIBUTE DETERMINATION METHOD**

(57) An attribute determination device including: an image analyzer configured to analyze an image of a first object appearing in the extracted image, and calculate a first probability that the first object has a first attribute; and an attribute determination controller configured to determine whether the first object has the first attribute based on a second probability and the first probability, the second probability being a probability for each of the plurality of image capturing devices and indicating a probability that an object having the first attribute appears in a captured image.

FIG. 4

ATTRIBUTE DETERMINATION SYSTEM 10   100

IMAGE CAPTURING DEVICE
- IMAGE CAPTURING UNIT — 1001
- IMAGE TRANSMISSION UNIT — 1002

200

ATTRIBUTE DETERMINATION DEVICE
- IMAGE ACQUISITION UNIT — 2001
- IMAGE ANALYSIS UNIT — 2002
- ATTRIBUTE DETERMINATION UNIT — 2003
- ATTRIBUTE SCORE UPDATE UNIT — 2004

**Description**

TECHNICAL FIELD

The present invention relates to an attribute determination device, an attribute determination program, and an attribute determination method.

BACKGROUND ART

There is an image analysis technique for identifying that a person appears in an image such as a still image and a moving image. The image analysis technique may determine (estimate) not only the presence or absence of a person but also attributes of the identified person, for example, gender and age.

Information about the determined attributes may be used, for example, for marketing or personal authentication. For example, in a facility where people gather, such as a shopping mall, cameras are installed in various places to determine the attributes of each visitor. Then, the determined attributes are reflected in future services and marketing for visitors to help improve the quality of the services and marketing.

Techniques related to image analysis are described in the following Patent Literature 1 to Patent Literature 3.

CITATION LIST

PATENT LITERATURE

Patent Literature 1: Japanese Patent Application Publication No. 2013-242825
Patent Literature 2: Japanese Patent Application Publication No. 2013-58060
Patent Literature 3: Japanese Patent Application Publication No. 2012-190159

SUMMARY OF INVENTION

PROBLEMS TO BE SOLVED BY THE INVENTION

However, in the determination of the attributes, for example, when the sharpness of the face of a person appearing in an image is low, the accuracy of the determination may be reduced, for example, resulting in an erroneous determination or no determination. Further, even when the image of the person is clear, the accuracy of the determination of the attributes may be reduced depending on the content of the attributes to be determined and the physical features of the person.

The reduced accuracy of the determination of the attributes may cause the improvement in quality to not be achieved even when the attributes are reflected in services and marketing.

Therefore, one disclosure provides an attribute determination device, an attribute determination program, and an attribute determination method for improving the accuracy of determination for an object whose attribute is to be determined appearing in an image.

MEANS FOR SOLVING THE PROBLEMS

An attribute determination device of an attribute determination system that includes the attribute determination device and a plurality of image capturing devices configured to capture images, the attribute determination device includes, an image acquirer configured to acquire the images captured by the plurality of image capturing devices, an image analyzer configured to extract an image in which a first object which is an object whose attribute is to be determined appears, analyze an image of the first object appearing in the extracted image, and calculate a first probability that the first object has a first attribute for each of the first image capturing devices that have captured the image in which the first object appears, and an attribute determination controller configured to determine whether the first object has the first attribute based on a second probability and the first probability, the second probability being a probability for each of the plurality of image capturing devices and indicating a probability that an object having the first attribute appears in a captured image.

ADVANTAGEOUS EFFECTS OF THE INVENTION

One disclosure improves the accuracy of determination for the object whose attribute is to be determined appearing in the image.

BRIEF DESCRIPTION OF DRAWINGS

Fig. 1 is a diagram illustrating a configuration example of an attribute determination system 10.
Fig. 2 is a diagram illustrating a configuration example of the attribute determination device 200.
Fig. 3 is a diagram illustrating a configuration example of the image capturing device 100.
Fig. 4 is a diagram illustrating an example of a functional block of the attribute determination system 10.
Fig. 5 illustrates an example of the attribute determination result table 226.
Fig. 6 illustrates an example of the attribute score table 225.
Fig. 7 illustrates an example of a processing flowchart of the attribute determination processing S100.
Fig. 8 illustrates an example of a processing flowchart of the person detection processing S200.
Fig. 9 illustrates an example of a processing flowchart of the image analysis processing S300.
Fig. 10 illustrates an example of a processing flowchart of the final attribute determination processing S400.
Fig. 11 illustrates an example of a processing flowchart of the attribute score update processing S500.
Fig. 12 illustrates an example of the attribute determination result table 226 after the update.
Fig. 13 illustrates an example of the attribute score table 225 after the update.
Fig. 14 illustrates an example of the attribute determination result table 226 in the case of determining a plurality of types of attributes.
Fig. 15 illustrates an example of the attribute score table 225 in the case of determining a plurality of types of attributes.

DESCRIPTION OF EMBODIMENTS

[First Embodiment]

A first embodiment will be described.

<Configuration example of attribute determination system>

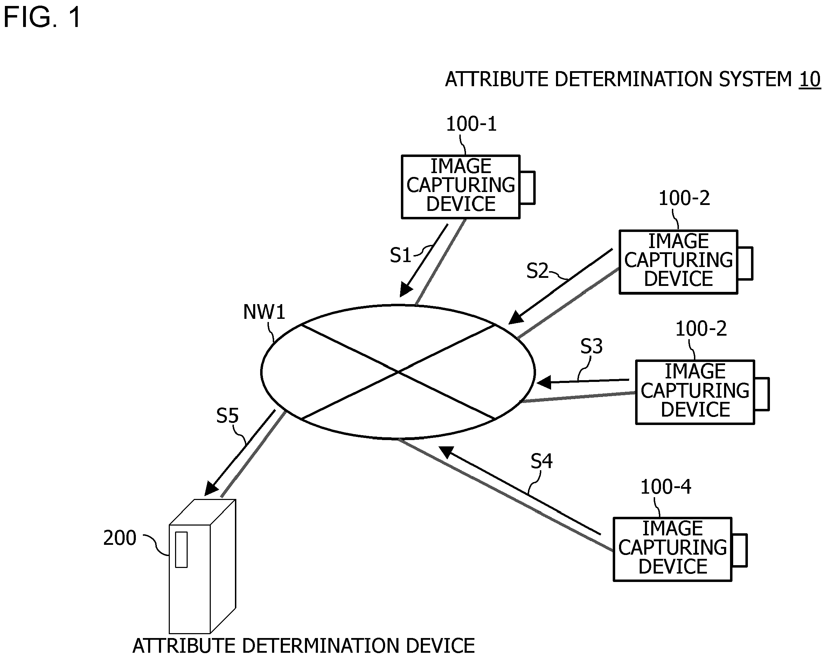

Fig. 1 is a diagram illustrating a configuration example of an attribute determination system 10. The attribute determination system 10 is a communication system that includes image capturing devices 100-1 to 100-4, an attribute determination device 200, and a network NW1. The attribute determination system 10 is, for example, a system that determines (estimates) an attribute of a person appearing in an image or images captured by the image capturing devices 100-1 to 100-4. The attribute determination system 10 is installed in a facility such as a shopping center or a department store (hereinafter, may be referred to as an installation facility).
The image capturing devices 100-1 to 100-4 (hereinafter, each of which may be referred to as an image capturing device 100) are each a device for capturing an image of a capture range of the device, and are each a camera installed for crime prevention, surveillance, or image acquisition. The image capturing device 100, for example, captures a moving image for a predetermined time. Further, the image capturing device 100 may capture still images at predetermined intervals. Further, the image capturing device 100 may capture both a still image and a moving image. Note that the attribute determination system 10 in Fig. 1 includes four image capturing devices 100, but any number of image capturing devices 100 can be included as long as it is two or more.
The image capturing devices 100 are installed so as to capture images of various places in the installation facility. The image capturing device 100 is installed in each sales section, for example, to capture the entire sales section. For example, the image capturing device 100-1 is installed in an outdoor equipment section, the image capturing device 100-2 is installed in a women's clothing section, the image capturing device 100-3 is installed in a men's clothing section, and the image capturing device 100-4 is installed in a food section.
The image capturing device 100 captures an image, and then transmits the captured image to the attribute determination device 200 (SI to S4). Further, the image capturing device 100 may store the captured image in a memory or a hard disk, and periodically or in response to a request from the attribute determination device 200, may transmit the stored image to the attribute determination device 200 (SI to S4).
The attribute determination device 200 is, for example, a server machine or a computer, which performs attribute determination processing for analyzing an image captured by the image capturing device 100 and determining an attribute of a visitor. When the attribute determination device 200 detects that a predetermined time has come, for example, the attribute determination device 200 performs the attribute determination processing. Further, the attribute determination device 200 acquires (receives) the image captured by each image capturing device 100 (S5). For example, in the attribute determination processing, the attribute determination device 200 requests the image capturing device 100 to transmit an image. Alternatively, the attribute determination device 200 may store in a memory or a hard disk the image transmitted from the image capturing device 100 at any timing.

The network NW1 is a network through which communication is made between the attribute determination device 200 and the image capturing device 100, and is, for example, a local network or an intranet in a facility in which the attribute determination system 10 is installed, or the Internet. The attribute determination device 200 and the image capturing device 100 communicate with each other via the network NW1 to transmit and receive captured images. The network NW1 is a network for providing wired or wireless connection.

<Configuration example of attribute determination device>

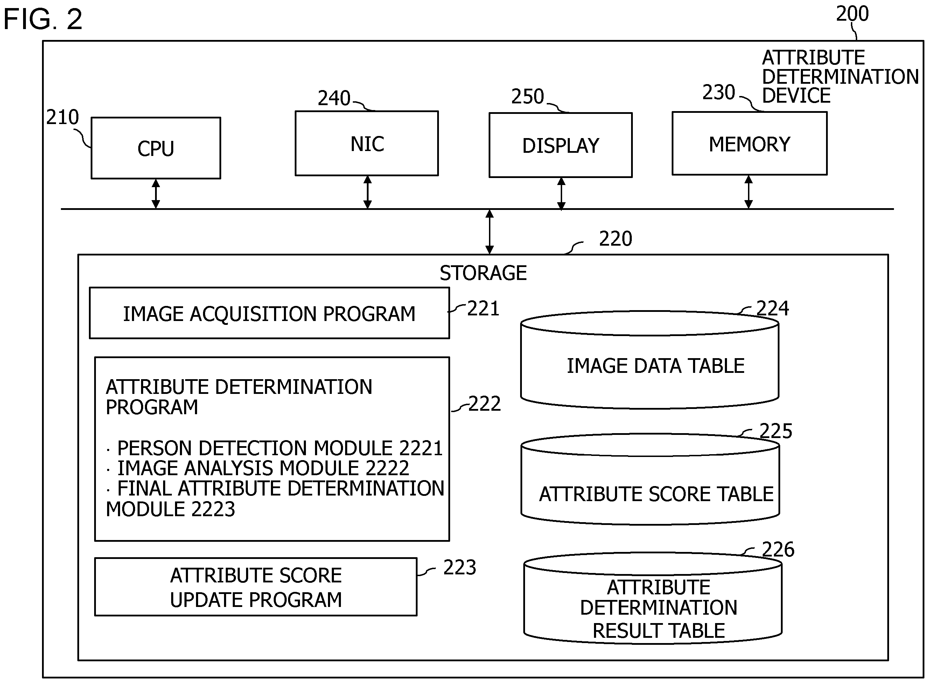

Fig. 2 is a diagram illustrating a configuration example of the attribute determination device 200. The attribute determination device 200 is a device that can communicate with other devices via the network NW1, and is, for example, a computer or a server machine.

The attribute determination device 200 includes a CPU (Central Processing Unit) 210, a storage 220, a memory 230, a NIC (Network Internet Card) 240, and a display 250.

The storage 220 is an auxiliary storage device such as a flash memory, an HDD (Hard Disk Drive), or an SSD (Solid State Drive), which stores programs and data. The storage 220 stores an image acquisition program 221, an attribute determination program 222, an attribute score update program 223, an image data table 224, an attribute score table 225, and an attribute determination result table 226. Note that the image data table 224, the attribute score table 225, and the attribute determination result table 226 may be stored in the memory 230.

The memory 230 is an area in which a program stored in the storage 220 is loaded. The memory 230 may be also used as an area in which the program stores data.

The NIC 240 is an interface for connecting to the network NW1. The NIC 240 is, for example, an interface device having a port connected to the Internet, such as a network interface card.

The display 250 is a display unit that displays an image captured by the image capturing device 100, an attribute determination result, and the like. The display 250 may be integrated with the attribute determination device 200, or may be a device connected by a cable or the like.

The CPU 210 is a processor that loads a program stored in the storage 220 into the memory 230, and executes the loaded program to construct corresponding units and to implement steps of processing.

The CPU 210 executes the image acquisition program 221 so as to construct an image acquisition unit to perform image acquisition processing. The image acquisition processing is processing of acquiring an image captured by the image capturing device 100 from the image capturing device 100. The attribute determination device 200 receives image data from the image capturing device 100 via, for example, the NIC 240 to acquire an image therefrom.

The CPU 210 executes the attribute determination program 222 so as to construct an image analysis unit and an attribute determination unit to perform attribute determination processing. The attribute determination processing is processing of determining attributes of people appearing in the image captured by the image capturing device 100 for each person. In the attribute determination processing, the attribute determination device 200 finally determines an attribute of the person based on an attribute determination resulting from image analysis and the characteristics of the image capturing device 100.

Further, the CPU 210 executes a person detection module 2221 included in the attribute determination program 222 so as to construct a person detection unit and an image analysis unit to perform person detection processing. The person detection processing is processing of detecting a new person from the image captured by the image capturing device 100. The new person is, for example, a person whose attribute has not yet been determined in a series of steps of image analysis processing.

Further, the CPU 210 executes an image analysis module 2222 included in the attribute determination program 222 so as to construct an image analysis unit to perform image analysis processing. The image analysis processing is processing of detecting (extracting) an image in which a person appears for each image capturing device 100, performing image analysis for each of the detected image capturing devices 100, and calculating the probability that the person has a certain attribute.

Further, the CPU 210 executes a final attribute determination module 2223 included in the attribute determination program 222 so as to construct an attribute determination unit to perform final attribute determination processing. The final attribute determination processing is processing of finally determining the attribute of the person based on the probability obtained from the image analysis and the characteristics of the image capturing device 100 that has captured the image.

The CPU 210 executes the attribute score update program 223 so as to construct an attribute score update unit to perform attribute score update processing. The attribute score update processing is processing of updating the attribute score according to the attribute determination result.

<Configuration example of image capturing device>

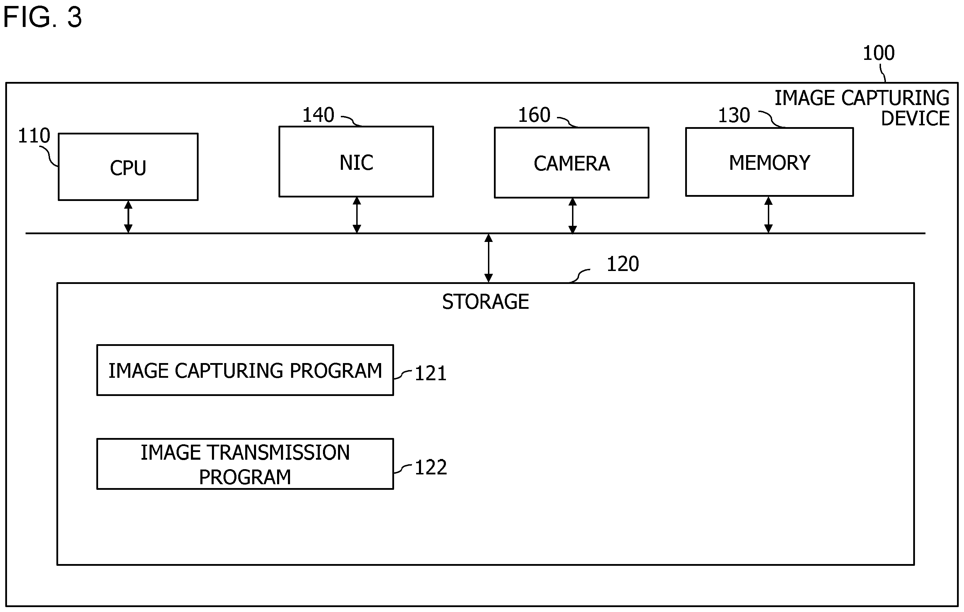

Fig. 3 is a diagram illustrating a configuration example of the image capturing device 100. The image capturing device 100 is a device that captures an image (still image, moving image, or both) of a predetermined range, and is, for example, a camera or a device including a camera.

The image capturing device 100 includes a CPU 110, a storage 120, a memory 130, a NIC 140, and a camera 160.

The storage 120 is an auxiliary storage device such as a flash memory, an HDD, or an SSD that stores programs and data. The storage 120 stores an image capturing program 121 and an image transmission program 122.

The memory 130 is an area in which a program stored in the storage 120 is loaded. The memory 130 may be also used as an area in which the program stores data.

The NIC 140 is an interface for connecting to the network NW1. The NIC 140 is, for example, an interface device having a port connected to the Internet, such as a network interface card.

The camera 160 is a device that captures an image (moving image, still image, etc.) of a predetermined range. The camera 160 captures images regularly or irregularly. Further, the camera 160 is triggered to capture an image by, for example, the CPU 110. Further, the image captured by the camera 160 is stored in, for example, the memory 130 or the storage 120.

The CPU 110 is a processor that loads a program stored in the storage 120 into the memory 130, and executes the loaded program to construct corresponding units and to implement steps of processing.

The CPU 110 executes the image capturing program 121 to perform image capturing processing. The image capturing processing is processing of capturing an image of the capture range of the image capturing device 100, for example, regularly. The captured image is, for example, stored in an external or internal memory or a hard disk, or transmitted to the attribute determination device 200.

The CPU 110 executes the image transmission program 122 to perform image transmission processing. The image transmission processing is processing of transmitting an image captured by the image capturing device 100 to the attribute determination device 200, for example, regularly.

<Configuration example of functional block of attribute determination system >

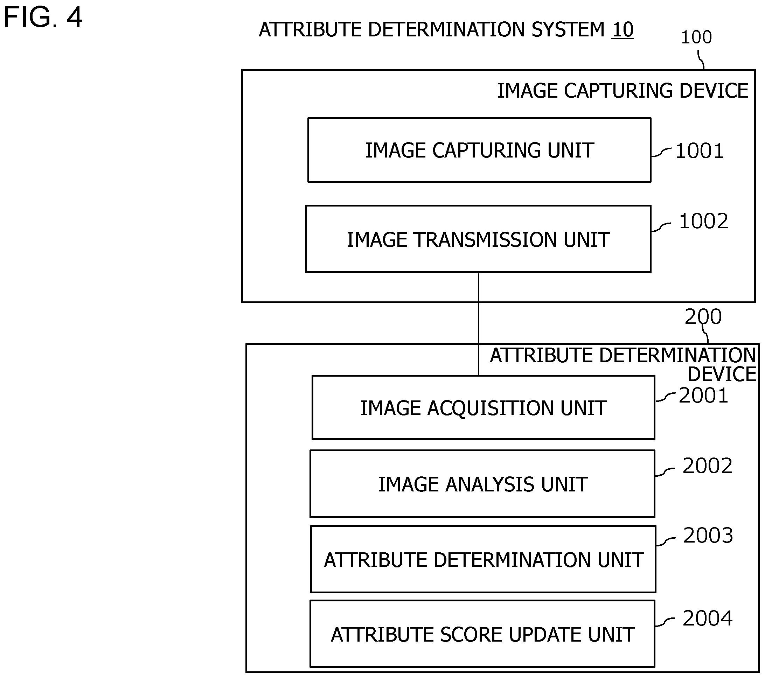

Fig. 4 is a diagram illustrating an example of a functional block of the attribute determination system 10. The image capturing device 100 includes an image capturing unit 1001 and an image transmission unit 1002. The image capturing unit 1001 and the image transmission unit 1002 are constructed, for example, by the processor of the image capturing device 100 executing a program. Further, the image capturing unit 1001 may be a camera. Further, the image transmission unit 1002 may be a device for a communication interface such as a network interface card.

The attribute determination device 200 includes an image acquisition unit (acquirer) 2001, an image analysis unit 2002, an attribute determination unit 2003, and an attribute score update unit 2004. The image acquisition unit 2001, the image analysis unit 2002, the attribute determination unit 2003, and the attribute score update unit 2004 are constructed, for example, by the processor of the attribute determination device 200 executing a program. Further, the image acquisition unit 2001 may be a device for a communication interface such as a network interface card.

The image capturing unit 1001 captures an image of a predetermined range regularly or irregularly. The image capturing unit 1001 stores the captured image in an internal or external memory or a hard disk, or passes the captured image to the image transmission unit 1002.

The image transmission unit 1002 transmits the image to the attribute determination device 200. The image transmission unit 1002 transmits an image, for example, regularly or irregularly, or transmits the image in response to a request from the attribute determination device 200. The image transmission unit 1002 is connected to the attribute determination device 200 by wire or wirelessly so as to communicate with the attribute determination device 200.

The image acquisition unit 2001 acquires the image from the image capturing device 100. The image acquisition unit 2001 receives the image transmitted by the image transmission unit 1002, stores the image in the image data table 224, or passes the image to the image analysis unit 2002. The image acquisition unit 2001 is connected to the image capturing device 100 by wire or wirelessly so as to communicate with the image capturing device 100.

The image analysis unit 2002 identifies a person appearing in the acquired image, analyzes the identified person, and calculates the probability that the identified person has a certain attribute (first attribute). The image analysis unit 2002 also searches for images captured by other image capturing devices 100 in which the identified person appears. Then, the image analysis unit 2002 calculates the probability that the identified person has the certain attribute (first attribute) for each image capturing device 100 that has captured the identified person.

The attribute determination unit 2003 finally determines whether or not the identified person has the certain attribute based on the probability calculated by the image analysis unit 2002 and the probability for each image capturing device 100 which is a probability that a person having the certain attribute appears in the image captured by the image capturing device 100. A series of steps of processing executed by the image analysis unit 2002 and the attribute determination unit 2003 is referred to as attribute determination processing.

Note that the attribute determination processing is executed, for example, when a predetermined time is reached, when a predetermined amount of images are accumulated, or when a request is made from an administrator of the attribute determination system 10.

The attribute score update unit 2004 updates the attribute score of each image capturing device 100 in the attribute score table 225 according to the determination result from the attribute determination unit 2003. The attribute score is, for example, a probability indicating how many people in a captured image have the certain attribute. The attribute score may be a numerical value based on statistics, or may be a numerical value based on the characteristics of the capture location (e.g., the location is where there are many men). Further, the attribute score may be a statistical value such as, for example, the total number of people appearing in the captured image or the number of people having the certain attribute.

<Various tables>

The tables stored in the attribute determination device 200 will be described.

<1. Image data table>

The image data table 224 is a table for storing images acquired from the image capturing devices 100. The attribute determination device 200 stores the image for each image capturing device 100. Further, after performing the attribute determination processing, for example, the attribute determination device 200 may delete the corresponding image stored in the image data table 224.

<2. Attribute determination result table>

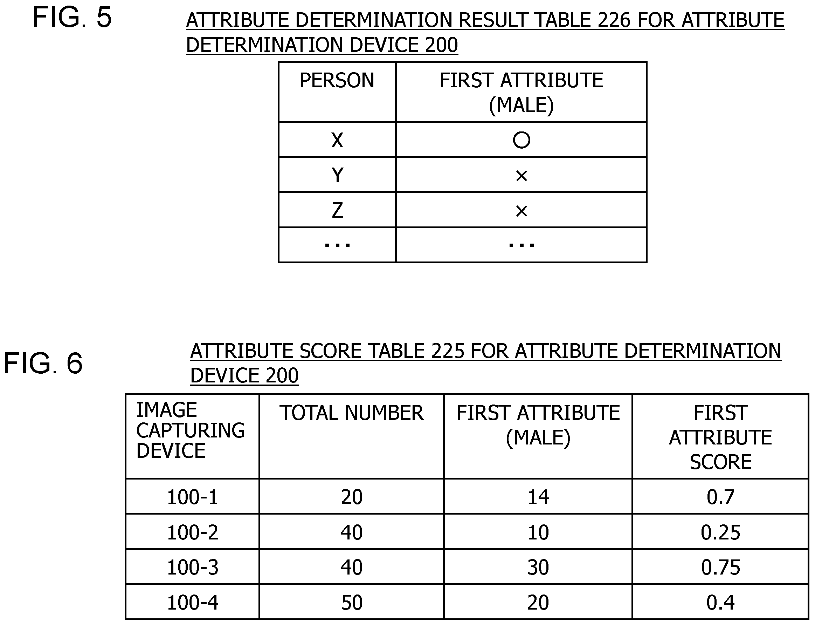

Fig. 5 illustrates an example of the attribute determination result table 226. The attribute determination result table 226 is a table for storing the attribute determination result of the attribute determination processing.

In the attribute determination result table 226, for example, "person" and "first attribute (male)" are stored.

The "person" is identification information indicating a person to be subject to attribute determination, and is, for example, the name of the person, the number for identifying the person, the time of image capturing, the identifier of the image capturing device, or the like. In Fig. 5, for example, the person identified by one letter of the alphabet such as "X" may be referred to as Person X or the like.

The "first attribute (male)" is information indicating whether or not the person has that attribute (first attribute). In Fig. 5, the first attribute indicates whether or not the person is male, a circle indicates that the person is male, and a cross indicates that the person is not male. Note that a plurality of types of attributes may be stored in the attribute determination result table 226, for example, each indicated as the nth attribute (n is an integer). When the attributes to be stored in the attribute determination result table 226 are stored for a plurality of types of attributes, information indicating whether or not the person has the attribute is stored for each type of attribute.

<3. Attribute score table>

Fig. 6 illustrates an example of the attribute score table 225. The attribute score table 225 is a table for storing the attribute score for each image capturing device 100.

In the attribute score table 225, for example, "total number", "first attribute (male)", and "first attribute score" are stored.

The "total number" is information indicating the total number of people appearing in the image captured by the corresponding image capturing device 100. The "total number" is updated after a new person is identified in the processing described below.

The "first attribute (male)" is information indicating the total number of people having that attribute (first attribute) among the people appearing in the image captured by the corresponding image capturing device 100. The "first attribute (male)" is updated after it is determined that a certain person has that attribute in the processing described below. Note that the attribute score table 225 in Fig. 6 stores only the attribute score related to the first attribute, but may store a plurality of types of attributes. In that case, the attribute score table 225 can store the total number of people having that attribute, as in the case of the "first attribute (male)".

The "first attribute score" is information indicating the probability that the person appearing in the image captured by the corresponding image capturing device 100 is a person having that attribute (first attribute). The "first attribute score" is, for example, a numerical value obtained by dividing the numerical value of the "first attribute (male)" by the numerical value of the "total number". Note that, in the case where the "first attribute score" is a numerical value obtained by dividing the numerical value of the "first attribute (male)" by the numerical value of the "total number", the "first attribute score" does not have to be stored in the attribute score table 225 because it can be calculated from the information elements of the "total number" and the "first attribute (male)".

<Attribute determination processing>

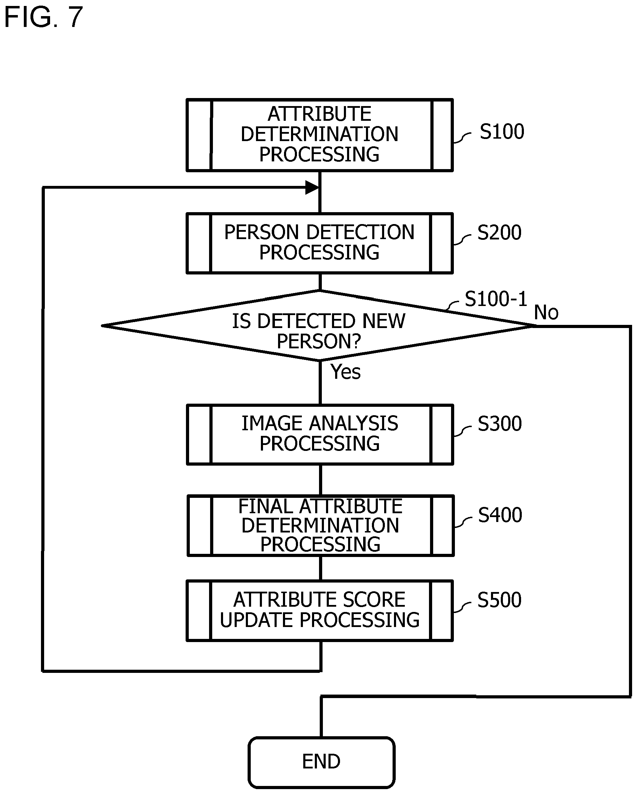

The attribute determination processing S100 executed by the attribute determination device 200 will be described. Fig. 7 illustrates an example of a processing flowchart of the attribute determination processing S100.

When the attribute determination device 200 detects a trigger to execute the attribute determination processing, the attribute determination device 200 executes the attribute determination processing S100. The attribute determination device 200 executes the person detection processing in the attribute determination processing S100 (S200).

The person detection processing S200 is processing of detecting a new person (a person who has not been detected in the person detection processing S200 performed in the past in the series of steps of processing) from the image. The details of the person detection processing S200 will be described later.

When the attribute determination device 200 does not detect a new person in the person detection processing S200 (No in S100-1), the attribute determination device 200 ends the attribute determination processing S100.

On the other hand, when the attribute determination device 200 detects a new person in the person detection processing S200 (Yes in S100-1), the attribute determination device 200 executes the image analysis processing (S300). The image analysis processing S300 is processing of determining an attribute (provisional attribute) of the person based on the image of the detected person. The details of the image analysis processing S300 will be described later.

The attribute determination device 200 executes the final attribute determination processing after executing the image analysis processing S300 (S400). The final attribute determination process S400 is processing of determining the attribute (final attribute) of the detected person based on the provisional probability (first probability) calculated in the image analysis processing S300 and the attribute score (second probability) for each image capturing device 100. The details of the final attribute determination processing S400 will be described later.

The attribute determination device 200 executes the attribute score update processing after executing the attribute determination final processing S400 (S500). The attribute score update processing S500 is processing of reflecting the attribute of the person determined in the final attribute determination processing S400 in the attribute score for each image capturing device 100 and updating the attribute score table 225. The details of the attribute score update processing S500 will be described later.

The attribute determination device 200 executes the person detection processing S200 again after executing the attribute score update processing S500. Then, the attribute determination device 200 repeats the series of steps of processing in the attribute determination processing S100 until a new person is not detected in the person detection processing S200 (until the attribute determination for all people appearing in the image is completed).

<Person detection processing>

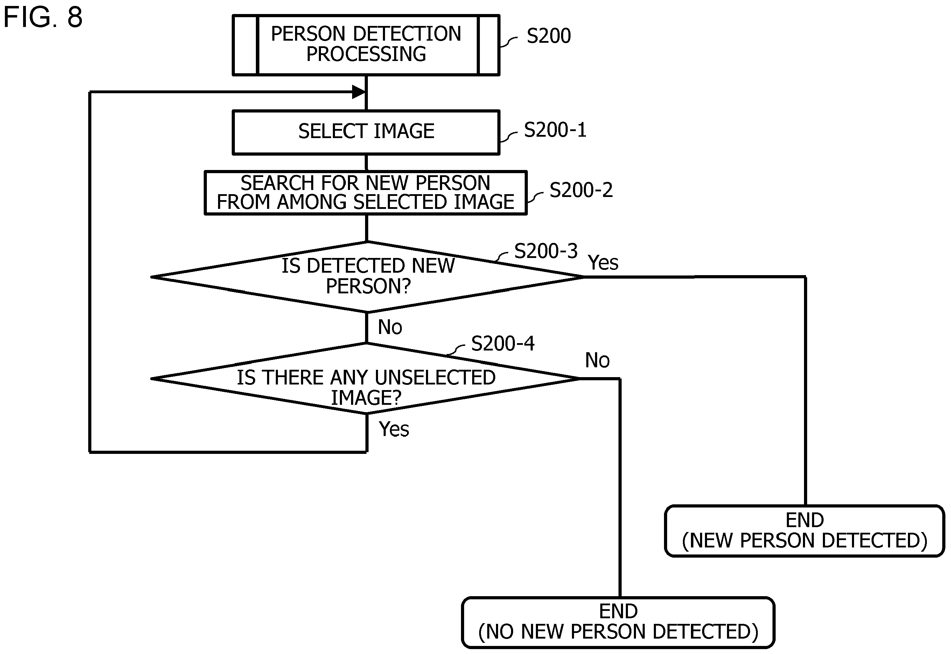

Fig. 8 illustrates an example of a processing flowchart of the person detection processing S200. The attribute determination device 200 selects an image in the person detection processing S200 (S200-1). As the image to be selected, for example, an image captured by the image capturing device 100 installed near the entrance of the facility is selected. Further, the image to be selected may be randomly selected.

The attribute determination device 200 searches for a new person (first object) from a plurality of persons (objects whose attribute is to be determined) appearing in the selected image (S200-2). The new person is a person who has not been detected in the person detection processing S200. Further, the new person refers to a person who has not been subjected to the attribute determination in the series of steps of attribute determination processing S200.

When the attribute determination device 200 detects a new person in the selected image (Yes in S200-3), the attribute determination device 200 ends the person detection processing S200 with the new person detected.

On the other hand, when the attribute determination device 200 fails to detect a new person in the selected image (No in S200-3), the attribute determination device 200 checks whether or not there is any unselected image (S200-4). When there is any unselected image (Yes in S200-4), the attribute determination device 200 selects a new image from among the unselected images (S200-1).

On the other hand, when there is no unselected image (No in S200-4), the attribute determination device 200 ends the person detection processing S200 with no new person detected.

Note that, in the detection of a new person (S200-2) in the person detection processing S200, for example, the attribute determination device 200 extracts a person from the image and analyzes the physical features (e.g., facial features) of the extracted person, and if the person having the analyzed physical features has not been detected as a new person in the past, the attribute determination device 200 determines that a new person has been detected.

<Image analysis processing>

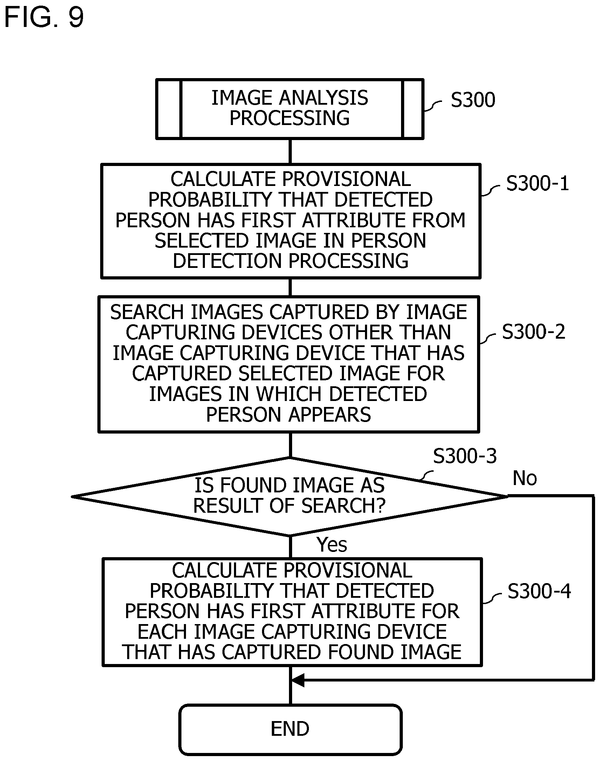

Fig. 9 illustrates an example of a processing flowchart of the image analysis processing S300. In the image analysis processing S300, the attribute determination device 200 calculates, from the selected image in the person detection processing S200, a provisional probability that the detected person has the first attribute (S300-1). The provisional probability is a probability, required to calculate (used when calculating) a final probability calculated in the final attribute determination processing S400 to be executed later, which is calculated based on the image analysis of a person. In the case where the first attribute is whether or not the person is male, for example, the processing S300-1 is processing of analyzing an image of the physical features of the detected person in the selected image and calculating a probability that the detected person is male from the facial features, the height, and the like.

The attribute determination device 200 searches the images of the image capturing devices 100 other than the image capturing device 100 (first image capturing device) that has captured the selected image for images in which the detected person appears (S300-2). In the processing S300-2, the attribute determination device 200 recognizes in which of the images of the image capturing devices 100 the detected person appears.

When the attribute determination device 200 finds an image or images in which the detected person appears as a result of the search (Yes in S300-3), the attribute determination device 200 calculates a provisional probability that the detected person has the first attribute for each image capturing devices 100 (first image capturing device) that has captured the found image (S300-4), and then ends the image analysis processing S300. The method of calculating the provisional probability is the same as that of the processing S3001.

On the other hand, when the attribute determination device 200 fails to find any image in which the detected person appears as a result of the search (No in S300-3), the attribute determination device 200 ends the image analysis processing S300.

<Final attribute determination processing>

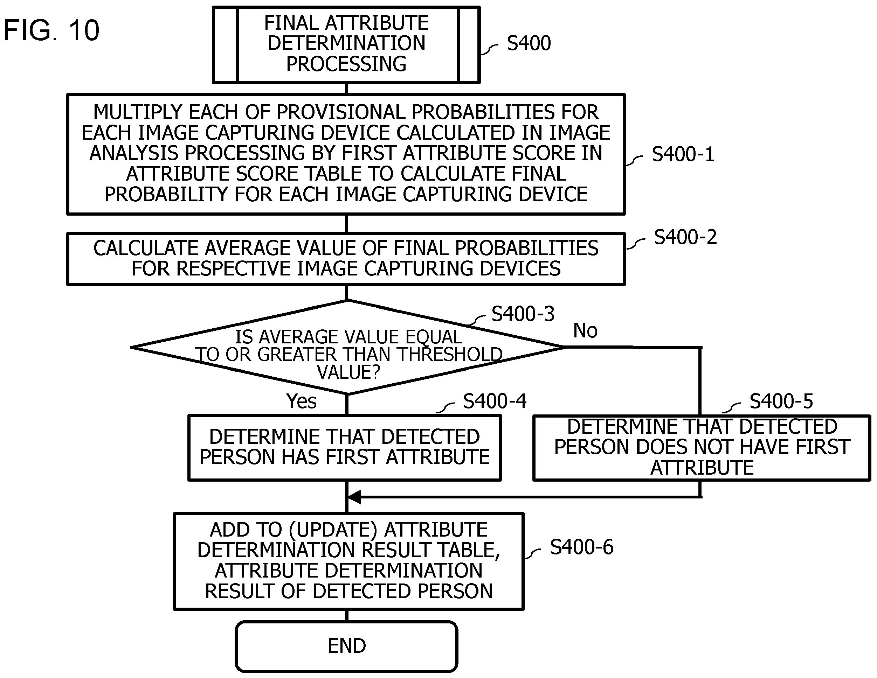

Fig. 10 illustrates an example of a processing flowchart of the final attribute determination processing S400. In the final attribute determination processing S400, the attribute determination device 200 multiplies each of the provisional probabilities for the image capturing devices 100 calculated in the image analysis processing S300 by the first attribute score in the attribute score table, and calculates a final probability for each image capturing device 100 (S400-1). The final probability for each image capturing device 100 is calculated by, for example, the following Equation (1).

$$PFx = PTx \times Sx \cdots \text{Equation (1)}$$

, where PFx indicates the final probability for an image capturing device x, PTx indicates the provisional probability for the image capturing device x, and Sx indicates the first attribute score in the attribute score table for the image capturing device x.

Then, the attribute determination device 200 calculates an average value of the final probabilities calculated for the respective image capturing devices 100 (S400-2).

The average value of the final probabilities is calculated using, for example, the following Equation (2).

$$PFave = (PF1 + PF2 + ... + PFn)/n \cdots \text{Equation (2)}$$

, where PFave indicates the average value of the final probabilities, and n indicates the number of image capturing devices 100 for which the final probabilities have been calculated.

Note that the provisional probability indicates a probability that a person has the first attribute based on, for example, image determination. Further, the first attribute score indicates, for example, a probability that the person in the image captured by the corresponding image capturing device 100 has the first attribute, based on statistics. In this case, the final probability is a numerical value obtained by multiplying the probabilities, and the larger the numerical value, the higher the probability of having the first attribute.

The attribute determination device 200 compares the average value of the final probabilities with a threshold value (S400-3). When the average value of the final probabilities is equal to or greater than the threshold value (Yes in S400-3), the attribute determination device 200 determines that the detected person has the first attribute (S400-4). On the other hand, when the average value of the final probabilities is not equal to or greater than the threshold value (No in S400-3), the attribute determination device 200 determines that the detected person does not have the first attribute (S400-5).

Then, the attribute determination device 200 adds the attribute determination result of the detected person to the attribute determination result table (S400-6), and ends the final attribute determination processing S400.


<Attribute score update processing>

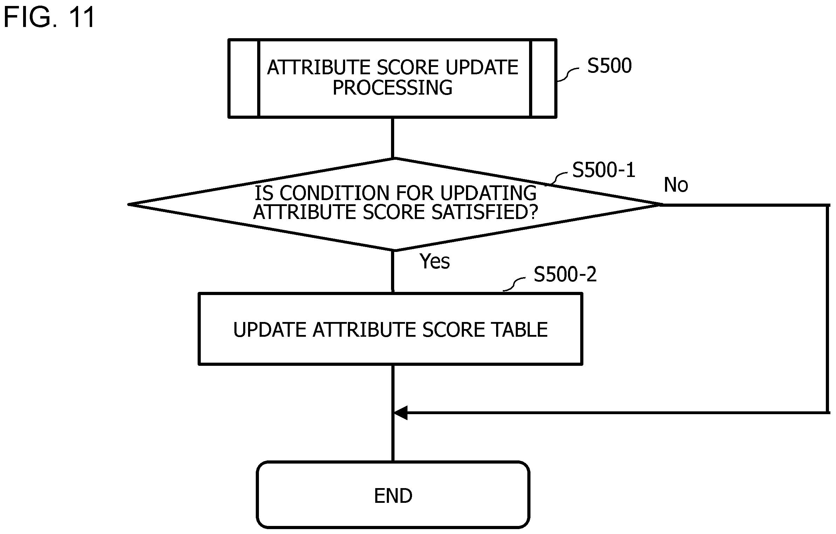

Fig. 11 illustrates an example of a processing flowchart of the attribute score update processing S500. The attribute determination device 200 checks whether or not the condition for updating the attribute score is satisfied in the attribute score update processing S500 (S500-1). Then, when the condition for updating the attribute score is satisfied (Yes in S500-1), the attribute determination device 200 updates the attribute score table (S500-2), and then ends the attribute score update processing S500.

On the other hand, when the condition for updating the attribute score is satisfied (No in S500-1), the attribute determination device 200 ends the attribute score update processing S500 without updating the attribute score table 225.

The condition for updating is, for example, that the difference between the average value of the final probabilities and the threshold value is equal to or greater than a predetermined value in the final attribute determination processing S400. The larger the difference between the average value of the final probabilities and the threshold value, the higher the accuracy of the attribute determination result, and the smaller the difference, the lower the accuracy of the attribute determination result. Accordingly, in order to determine the attribute, the greater the difference between the average value of the final probabilities and the threshold value, the higher the accuracy. Therefore, setting the condition for updating makes it possible to prevent a low accuracy result of determination of the attribute from being reflected in the attribute score.

To update the attribute score, for example, the attribute score table 225 is updated. The attribute determination device 200 increases, for example, the total number (first cumulative number) in the attribute score table 225 by one. Then, when the attribute determination device 200 determines that a certain person has the first attribute, the attribute determination device 200 increases the number of people who have the first attribute (second cumulative number) by one. As a result, the attribute score table 225 becomes the latest statistical information, and the accuracy of the attribute score is improved.


<Attribute determination example>

The attribute determination processing S100 and the transition of each table will be described below with reference to specific numerical values.

The attribute determination device 200 executes the attribute determination processing S100 at a certain timing. Then, the attribute determination device 200 detects Person A as a new person from the image captured by the image capturing device 100-1 in the person detection processing S200 (Yes in S200-3 in Fig. 8).

The attribute determination device 200 calculates a provisional probability that Person A appears in the image of the image capturing device 100-1 has the first attribute (S300-1 in Fig. 9). The attribute determination device 200 calculates, for example, the provisional probability as 0.55 as a result of the image determination.

The attribute determination device 200 searches for other images in which Person A appears (S300-2 in Fig. 9). Then, the attribute determination device 200 finds that Person A appears in the image captured by the image capturing device 100-3 (S300-3 in Fig. 9).

The attribute determination device 200 calculates a provisional probability that Person A has the first attribute based on the image of the image capturing device 100-3 (S300-4 in Fig. 9). The attribute determination device 200 calculates, for example, the provisional probability as 0.40 as a result of the image determination.

The attribute determination device 200 calculates a final probability of each of the image capturing device 100-1 and the image capturing device 100-3 that Person A has the first attribute by multiplying the corresponding provisional probability by the corresponding attribute score (S400-1 in Fig. 10).

Using the attribute score examples in the attribute score table 225 in Fig. 6, the final probability for the image capturing device 100-1 is 0.385 (= 0.55 x 0.7), and the final probability for the image capturing device 100-3 is 0.3 (= 0.4 x 0.75).

The attribute determination device 200 calculates an average value of the final probabilities, 0.3425 (= (0.385 + 0.3)/2) (S400-2 in Fig. 10). The attribute determination device 200 compares the calculated average value of the final probabilities with the threshold value (S400-3 in Fig. 10).

For example, for an attribute having two elements to be determined such as whether or not the person is male, the threshold value is 0.25 which is a numerical value obtained by multiplying the probability of being male, half, i.e., 0.5, based on the image determination by 0.5 indicating the attribute score of a location where the male and female ratios are the same.

Since the average value of the final probabilities, 0.3425, is equal to or greater than the threshold value, 0.25 (Yes in S400-3 in Fig. 10), the attribute determination device 200 determines that Person A has the first attribute (S400-4 in Fig. 10). The attribute determination device 200 adds the result of determining the attribute of Person A to the attribute determination result table (S400-6 in Fig. 10).

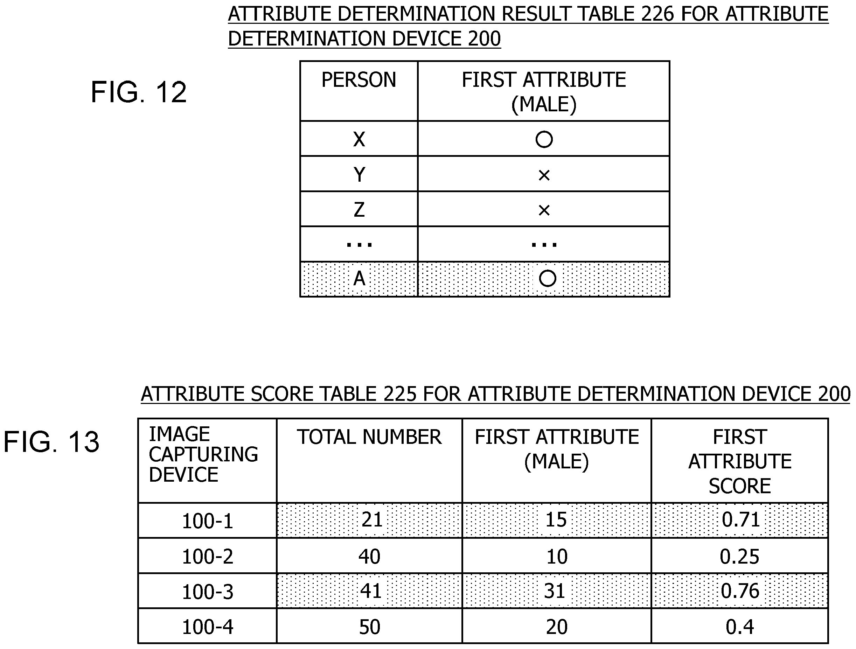

Fig. 12 illustrates an example of the attribute determination result table 226 after the update. The updated part is shaded. The attribute determination device 200 adds that Person A is the first attribute to the end of the attribute determination result table 226.

The attribute determination device 200 checks whether or not the attribute score is to be updated (S500-1 in Fig. 11). When the attribute determination device 200 determines that the attribute score is to be updated (Yes in S500-1 in Fig. 11), the attribute determination device 200 updates the attribute score table (S500-2 in Fig. 11).

Fig. 13 illustrates an example of the attribute score table 225 after the update. The updated part is shaded. The attribute determination device 200 increases the total number for the image capturing device 100-1 in the attribute score table 225 by one, and increases the number of people who have the first attribute by one. Then, the attribute determination device 200 calculates the attribute score of the first attribute for the image capturing device 100-1 as 0.71 (15/21), and updates the attribute score table 225. Similarly, the attribute determination device 200 updates the total number, the first attribute, and the attribute score of the first attribute for the image capturing device 100-3 in the attribute score table 225.

Then, the attribute determination device 200 searches for a person other than Person A in the image (S200-1 and -2 in Fig. 8), and executes the same processing until a new person fails to be detected.

In the first embodiment, the attribute determination device 200 improves the accuracy of whether or not a person has a certain attribute based on the probability (provisional probability) that the person has the certain attribute, which is calculated from image determination based on the image(s) of the person, and the attribute score for the image capturing device 100 that has captured the person.

For example, in the above-mentioned specific examples, if any attribute score is not taken into consideration, it will be determined whether or not Person A has the first attribute by using only a provisional probability of 0.55 from the image of the image capturing device 100-1 and a provisional probability of 0.4 from the image of the image capturing device 100-3. In this case, for example, the average value of the provisional probabilities is 0.475, which is a probability of 0.5 or less for the first attribute, and thus this may result in a determination that the person does not have the first attribute, which is different from the attribute determination result in the first embodiment.

[Other Embodiments]

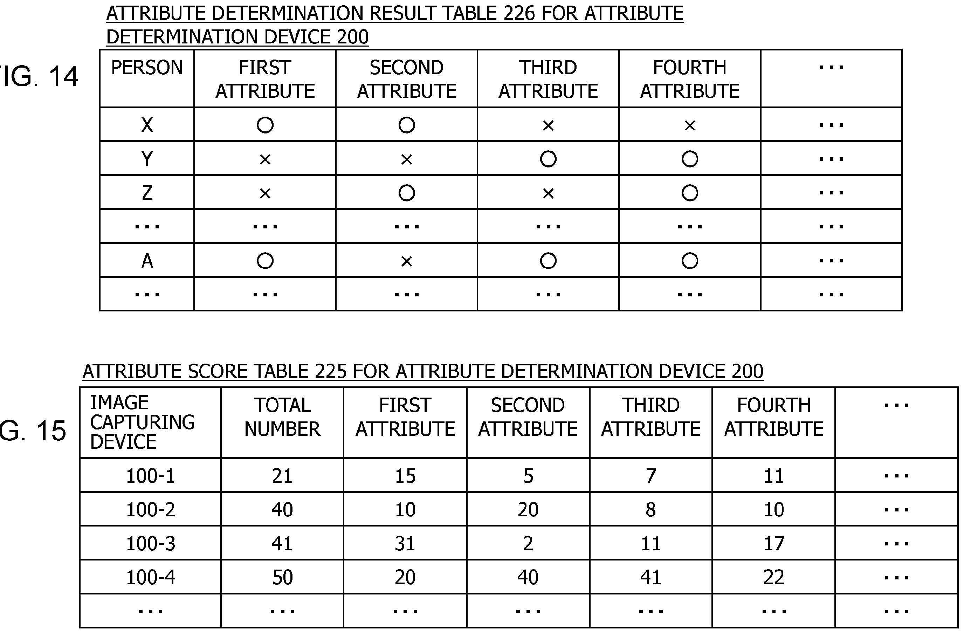

In the first embodiment, only one attribute (first attribute) is used as the determination target. However, a plurality of types of attributes may be used as determination targets. Fig. 14 illustrates an example of the attribute determination result table 226 in the case of determining a plurality of types of attributes. The attribute determination device 200 also determines other types of attributes in the same manner as the determination of the first attribute in the first embodiment described above, and reflects the determination results in the attribute determination result table 226. The types of attributes may include, for example, physical features such as age and height, and preferences such as the color and shape of hats and clothes.

Further, Fig. 15 illustrates an example of the attribute score table 225 in the case of determining a plurality of types of attributes. The attribute determination device 200 updates the attribute score table 225 not only for the total number and the first attribute but also for the number of people who has the second attribute and those for the other attributes. Note that, in the case where a plurality of types of attributes are used as determination targets, the condition for updating in the attribute score update processing S500 is determined comprehensively based on the determination results of the types of attributes.

Further, in the first embodiment, the attribute score is the ratio (statistical score) of people who have a certain attribute to the total number of people who appear in the image captured by the image capturing device 100. However, the attribute score may be a numerical value according to the characteristics of the image capturing device 100. For example, when the image capturing device 100 captures an image of the venue of a seminar for men, the first attribute score for the image capturing device 100 may be a numerical value as close as possible to 1.0. In other words, the attribute score may a numerical value according to the characteristics of a location where the image capturing device 100 captures an image, instead of a statistical score. Further, the attribute score may be a numerical value in consideration of both the statistical score and the characteristics of the image capturing device 100.

Further, the method of calculating the final probability is not limited to Equation (1). The final probability can be a numerical value in which both the attribute score for the image capturing device 100 and the probability (provisional probability) based on the image determination are taken into consideration. For example, the final probability may be calculated by addition instead of multiplication.

Further, in the first embodiment, the attribute score is a probability, but may be a statistical value. For example, the total number and the number for the first attribute in the attribute score table 225 may be referred to as attribute scores.

REFERENCE SIGNS LIST

10      Attribute determination system

100      Image capturing device
110      CPU
120      Storage
121      Image capturing program
122      Image transmission program
130      Memory
160      Camera
200      Attribute determination device
210      CPU
220      Storage
221      Image acquisition program
222      Attribute determination program
2221      Person detection module
2222      Image analysis module
2223      Final attribute determination module
223      Attribute score update program
224      Image data table
225      Attribute score table
226      Attribute determination result table
230      Memory
250      Display
1001      Image capturing unit
1002      Image transmission unit
2001      Image acquisition unit
2002      Image analysis unit
2003      Attribute determination unit
2004      Attribute score update unit

**Claims**

1. An attribute determination device of an attribute determination system that includes the attribute determination device and a plurality of image capturing devices configured to capture images, the attribute determination device comprising:

an image acquirer configured to acquire the images captured by the plurality of image capturing devices;
an image analyzer configured to

extract an image in which a first object which is an object whose attribute is to be determined appears,
analyze an image of the first object appearing in the extracted image, and
calculate a first probability that the first object has a first attribute for each of the first image capturing devices that have captured the image in which the first object appears; and

an attribute determination controller configured to determine whether the first object has the first attribute based on a second probability and the first probability, the second probability being a probability for each of the plurality of image capturing devices and indicating a probability that an object having the first attribute appears in a captured image.

2. The attribute determination device according to claim 1, wherein the attribute determination controller is configured to

   calculate a numerical value obtained by multiplying the first probability and the second probability for each of the first image capturing devices,
   calculate an average value of the calculated numerical values, and
   in a case where the average value is equal to or greater than a threshold value, determine that the first object has the first attribute.

3. The attribute determination device according to claim 1, wherein the second probability includes a ratio of a second cumulative number of the object whose attribute is to be determined having the first attribute to a first cumulative number of the object whose attribute is to be determined appearing in the images captured by the image capturing device in the past.

4. The attribute determination device according to claim 3, further comprising an attribute score updater configured to update the second probability for the first image capturing device according to a result of the determination.

5. The attribute determination device according to claim 4, wherein the attribute determination controller is configured to

   increase the first cumulative number by one for each of the first image capturing devices in updating the second probability, and
   in a case of determining that the first object has the first attribute, increase the second cumulative number by one.

6. The attribute determination device according to claim 1, wherein the second probability includes a probability calculated based on characteristics of a location where the image capturing device captures an image.

7. The attribute determination device according to claim 1, wherein the first attribute includes information on physical features of the first object.

8. The attribute determination device according to claim 7, wherein the physical features include gender.

9. An attribute determination program executed by a computer included in an attribute determination device of an attribute determination system that includes the attribute determination device and a plurality of image capturing devices configured to capture images, the attribute determination program causing the computer to execute:

   image acquisition processing of acquiring the images captured by the plurality of image capturing devices;
   image analysis processing of

   extracting an image in which a first object which is an object whose attribute is to be determined appears, analyzing an image of the first object appearing in the extracted image, and
   calculating a first probability that the first object has a first attribute for each of the first image capturing devices that have captured the image in which the first object appears; and

   attribute processing of determining whether the first object has the first attribute based on a second probability and the first probability, the second probability being a probability for each of the plurality of image capturing devices and indicating a probability that an object having the first attribute appears in a captured image.

10. An attribute determination method performed in an attribute determination device of an attribute determination system that includes the attribute determination device and a plurality of image capturing devices configured to capture images, the attribute determination method comprising:

    acquiring the images captured by the plurality of image capturing devices;
    extracting an image in which a first object which is an object whose attribute is to be determined appears, analyzing an image of the first object appearing in the extracted image, and calculating a first probability that the first object has a first attribute for each of the first image capturing devices that have captured the image in which the first object appears; and
    determining whether the first object has the first attribute based on a second probability and the first probability, the second probability being a probability for each of the plurality of image capturing devices and indicating a probability that an object having the first attribute appears in a captured image.

# FIG. 1

ATTRIBUTE DETERMINATION SYSTEM 10

FIG. 2

ATTRIBUTE DETERMINATION DEVICE — 200

210 CPU

240 NIC

250 DISPLAY

230 MEMORY

220 STORAGE

IMAGE ACQUISITION PROGRAM — 221

ATTRIBUTE DETERMINATION PROGRAM — 222

· PERSON DETECTION MODULE 2221
· IMAGE ANALYSIS MODULE 2222
· FINAL ATTRIBUTE DETERMINATION MODULE 2223

ATTRIBUTE SCORE UPDATE PROGRAM — 223

IMAGE DATA TABLE — 224

ATTRIBUTE SCORE TABLE — 225

ATTRIBUTE DETERMINATION RESULT TABLE — 226

FIG. 3

EP 4 040 381 A1

# FIG. 4

ATTRIBUTE DETERMINATION SYSTEM 10

100

**IMAGE CAPTURING DEVICE**

| IMAGE CAPTURING UNIT | 1001 |

| IMAGE TRANSMISSION UNIT | 1002 |

200

**ATTRIBUTE DETERMINATION DEVICE**

| IMAGE ACQUISITION UNIT | 2001 |

| IMAGE ANALYSIS UNIT | 2002 |

| ATTRIBUTE DETERMINATION UNIT | 2003 |

| ATTRIBUTE SCORE UPDATE UNIT | 2004 |

EP 4 040 381 A1

## FIG. 5

ATTRIBUTE DETERMINATION RESULT TABLE 226 FOR ATTRIBUTE DETERMINATION DEVICE 200

| PERSON | FIRST ATTRIBUTE (MALE) |
|--------|------------------------|
| X | ○ |
| Y | × |
| Z | × |
| … | … |

## FIG. 6

ATTRIBUTE SCORE TABLE 225 FOR ATTRIBUTE DETERMINATION DEVICE 200

| IMAGE CAPTURING DEVICE | TOTAL NUMBER | FIRST ATTRIBUTE (MALE) | FIRST ATTRIBUTE SCORE |
|------------------------|--------------|------------------------|-----------------------|
| 100-1 | 20 | 14 | 0.7 |
| 100-2 | 40 | 10 | 0.25 |
| 100-3 | 40 | 30 | 0.75 |
| 100-4 | 50 | 20 | 0.4 |

EP 4 040 381 A1

FIG. 7

```
┌─────────────────────────┐
│   ATTRIBUTE             │
│   DETERMINATION         │ ⌐ S100
│   PROCESSING            │
└─────────────────────────┘
            │
            ▼
┌─────────────────────────┐
│   PERSON DETECTION      │ ⌐ S200
│   PROCESSING            │
└─────────────────────────┘
            │
            ▼
        ╱─────────╲         S100-1
      ╱  IS DETECTED NEW ╲        No
      ╲    PERSON?      ╱────────────►
        ╲─────────╱
            │ Yes
            ▼
┌─────────────────────────┐
│   IMAGE ANALYSIS        │ ⌐ S300
│   PROCESSING            │
└─────────────────────────┘
            │
            ▼
┌─────────────────────────┐
│   FINAL ATTRIBUTE       │
│   DETERMINATION         │ ⌐ S400
│   PROCESSING            │
└─────────────────────────┘
            │
            ▼
┌─────────────────────────┐
│   ATTRIBUTE SCORE       │ ⌐ S500
│   UPDATE PROCESSING     │
└─────────────────────────┘
            │
            ▼
       ┌──────────┐
       │   END    │
       └──────────┘
```

FIG. 8

PERSON DETECTION PROCESSING — S200

SELECT IMAGE — S200-1

SEARCH FOR NEW PERSON FROM AMONG SELECTED IMAGE — S200-2

IS DETECTED NEW PERSON? — S200-3  Yes / No

IS THERE ANY UNSELECTED IMAGE? — S200-4  No / Yes

END (NEW PERSON DETECTED)

END (NO NEW PERSON DETECTED)

EP 4 040 381 A1

FIG. 9

```
┌─┬─────────────────────┬─┐
│ │   IMAGE ANALYSIS    │ │ ⌐ S300
│ │     PROCESSING      │ │
└─┴─────────────────────┴─┘
           │
┌──────────────────────────┐
│    CALCULATE PROVISIONAL  │ ⌐ S300-1
│  PROBABILITY THAT DETECTED │
│ PERSON HAS FIRST ATTRIBUTE FROM │
│  SELECTED IMAGE IN PERSON │
│    DETECTION PROCESSING   │
└──────────────────────────┘
           │
┌──────────────────────────┐
│ SEARCH IMAGES CAPTURED BY IMAGE │
│  CAPTURING DEVICES OTHER THAN │ ⌐ S300-2
│ IMAGE CAPTURING DEVICE THAT HAS │
│   CAPTURED SELECTED IMAGE FOR │
│     IMAGES IN WHICH DETECTED │
│         PERSON APPEARS    │
└──────────────────────────┘
           │
         S300-3
      ╱──────────╲                    No
     ╱ IS FOUND IMAGE AS ╲───────────────┐
     ╲  RESULT OF SEARCH? ╱               │
      ╲──────────╱                       │
         │ Yes                           │
┌──────────────────────────┐             │
│    CALCULATE PROVISIONAL  │             │
│  PROBABILITY THAT DETECTED │ ⌐ S300-4   │
│ PERSON HAS FIRST ATTRIBUTE FOR │         │
│   EACH IMAGE CAPTURING DEVICE │          │
│  THAT HAS CAPTURED FOUND IMAGE │         │
└──────────────────────────┘             │
           │◄────────────────────────────┘
    ┌──────────────┐
    │     END      │
    └──────────────┘
```

FIG. 10

```
┌──────────────────────────┐
│   FINAL ATTRIBUTE        │ — S400
│   DETERMINATION          │
│   PROCESSING             │
└──────────────────────────┘
            │
┌──────────────────────────────────────────┐
│ MULTIPLY EACH OF PROVISIONAL PROBABILITIES │ — S400-1
│ FOR EACH IMAGE CAPTURING DEVICE CALCULATED │
│ IN IMAGE ANALYSIS PROCESSING BY FIRST      │
│ ATTRIBUTE SCORE IN ATTRIBUTE SCORE TABLE   │
│ TO CALCULATE FINAL PROBABILITY FOR EACH    │
│ IMAGE CAPTURING DEVICE                     │
└──────────────────────────────────────────┘
            │
┌──────────────────────────────────────────┐
│ CALCULATE AVERAGE VALUE OF FINAL           │ — S400-2
│ PROBABILITIES FOR RESPECTIVE IMAGE         │
│ CAPTURING DEVICES                          │
└──────────────────────────────────────────┘
            │
         S400-3
      ╱IS AVERAGE VALUE EQUAL╲        No
     ╱ TO OR GREATER THAN THRESHOLD ╲─────────┐
      ╲      VALUE?          ╱                 │
         ╲              ╱                      │
          Yes   S400-4                  S400-5 │
┌──────────────────────┐      ┌──────────────────────┐
│ DETERMINE THAT       │      │ DETERMINE THAT       │
│ DETECTED PERSON HAS  │      │ DETECTED PERSON DOES │
│ FIRST ATTRIBUTE      │      │ NOT HAVE FIRST       │
│                      │      │ ATTRIBUTE            │
└──────────────────────┘      └──────────────────────┘
            │                          │
            │◄─────────────────────────┘
┌──────────────────────────────────────────┐
│ ADD TO (UPDATE) ATTRIBUTE DETERMINATION    │ — S400-6
│ RESULT TABLE, ATTRIBUTE DETERMINATION      │
│ RESULT OF DETECTED PERSON                  │
└──────────────────────────────────────────┘
            │
        ┌─────────┐
        │   END   │
        └─────────┘
```

EP 4 040 381 A1

FIG. 11

```
┌──────────────────────────────┐
│  ATTRIBUTE SCORE UPDATE      │⌐ S500
│  PROCESSING                  │
└──────────────┬───────────────┘
               │
        ╱──────┴──────╲              S500-1
      ╱                 ╲          ⌐           No
    ╱  IS CONDITION FOR   ╲────────────────────────┐
    ╲  ATTRIBUTE SCORE     ╱                        │
      ╲  SATISFIED?       ╱                         │
        ╲──────┬──────╱                             │
               │ Yes                                │
               │        ⌐ S500-2                    │
    ┌──────────┴───────────────┐                    │
    │  UPDATE ATTRIBUTE SCORE  │                    │
    │  TABLE                   │                    │
    └──────────┬───────────────┘                    │
               │◄───────────────────────────────────┘
               │
    ┌──────────┴───────────────┐
    │           END            │
    └──────────────────────────┘
```

ATTRIBUTE DETERMINATION RESULT TABLE 226 FOR ATTRIBUTE
DETERMINATION DEVICE 200

FIG. 12

| PERSON | FIRST ATTRIBUTE (MALE) |
|--------|------------------------|
| X | ◯ |
| Y | × |
| Z | × |
| . . . | . . . |
| A | ◯ |

ATTRIBUTE SCORE TABLE 225 FOR ATTRIBUTE DETERMINATION DEVICE 200

FIG. 13

| IMAGE CAPTURING DEVICE | TOTAL NUMBER | FIRST ATTRIBUTE (MALE) | FIRST ATTRIBUTE SCORE |
|------------------------|--------------|------------------------|-----------------------|
| 100-1 | 21 | 15 | 0.71 |
| 100-2 | 40 | 10 | 0.25 |
| 100-3 | 41 | 31 | 0.76 |
| 100-4 | 50 | 20 | 0.4 |

## FIG. 14

ATTRIBUTE DETERMINATION RESULT TABLE 226 FOR ATTRIBUTE DETERMINATION DEVICE 200

| PERSON | FIRST ATTRIBUTE | SECOND ATTRIBUTE | THIRD ATTRIBUTE | FOURTH ATTRIBUTE | · · · |
|--------|------|------|------|------|------|
| X | ○ | ○ | × | × | · · · |
| Y | × | × | ○ | ○ | · · · |
| Z | × | ○ | × | ○ | · · · |
| · · · | · · · | · · · | · · · | · · · | · · · |
| A | ○ | × | ○ | ○ | · · · |
| · · · | · · · | · · · | · · · | · · · | · · · |

## FIG. 15

ATTRIBUTE SCORE TABLE 225 FOR ATTRIBUTE DETERMINATION DEVICE 200

| IMAGE CAPTURING DEVICE | TOTAL NUMBER | FIRST ATTRIBUTE | SECOND ATTRIBUTE | THIRD ATTRIBUTE | FOURTH ATTRIBUTE | · · · |
|--------|------|------|------|------|------|------|
| 100-1 | 21 | 15 | 5 | 7 | 11 | · · · |
| 100-2 | 40 | 10 | 20 | 8 | 10 | · · · |
| 100-3 | 41 | 31 | 2 | 11 | 17 | · · · |
| 100-4 | 50 | 20 | 40 | 41 | 22 | · · · |
| · · · | · · · | · · · | · · · | · · · | · · · | · · · |

EP 4 040 381 A1

## INTERNATIONAL SEARCH REPORT

| International application No. |
|---|
| PCT/JP2019/038734 |

A. CLASSIFICATION OF SUBJECT MATTER
Int.Cl. G06T7/00(2017.01)i

According to International Patent Classification (IPC) or to both national classification and IPC

B. FIELDS SEARCHED

Minimum documentation searched (classification system followed by classification symbols)
Int.Cl. G06T7/00

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-250712 A (UNIV. WASEDA) 15 September 2005, paragraphs [0059]–[0157], fig. 1-8 (Family: none) | 1-10 |
| A | JP 2015-99509 A (TOSHIBA TEC CORPORATION) 28 May 2015, paragraphs [0011]–[0065], fig. 1-6 (Family: none) | 1-10 |
| A | JP 2004-54376 A (JAPAN SCIENCE AND TECHNOLOGY CORP.) 19 February 2004, paragraphs [0027]–[0115], fig. 1-11 (Family: none) | 1-10 |

☒ Further documents are listed in the continuation of Box C.          ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 December 2019 (11.12.2019) | 24 December 2019 (24.12.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/038734 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2007-328746 A (SONY COMPUTER ENTERTAINMENT INC.) 20 December 2007, entire text, all drawings & US 2008/0063236 A1, entire text, all drawings | 1-10 |
| A | JP 2019-53381 A (OKI ELECTRIC INDUSTRY CO., LTD.) 04 April 2019, paragraphs [0022]-[0081], fig. 1-8 (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013242825 A
- JP 2013058060 A

- JP 2012190159 A